# EUROPÄISCHE PATENTSCHRIFT

(11) **EP 4 133 573 B1**
(45) Veröffentlichungstag und Bekanntmachung des Hinweises auf die Patenterteilung: **29.01.2025**
(21) Anmeldenummer: 21708125.6
(22) Anmeldetag: 09.02.2021
(51) Int. Cl.: H02K 3/50, H02K 7/18

(54) **HALTESYSTEM FÜR STROMSCHIENEN AN STATOREN BZW. STATORSEGMENTEN DYNAMOELEKTRISCHER MASCHINEN**
BUS BAR HOLDING SYSTEM FOR STATORS OR STATOR SEGMENTS OF DYNAMOELECTRIC MACHINES
SYSTÈME DE MAINTIEN DES RAILS DE BUS SUR DES STATORS OU DES SEGMENTS DE STATOR DE MACHINES DYNAMOÉLECTRIQUES STATORSEGMENTEN DYNAMOELEKTRISCHER MASCHINEN

(30) Priorität: 06.04.2020 EP 20168159
(43) Veröffentlichungstag der Anmeldung: 15.02.2023
(73) Patentinhaber: Flender GmbH, 46395 Bocholt (DE)
(72) Erfinder: BRENNER, Robin, 94148 Kirchham (DE); DEUTSCH, Artur, 94086 Bad Griesbach i. Rottal (DE); KOESZEGI, Attila, 24420 Kanjiza (RS); LINDMEIER, Andreas, 94099 Ruhstorf (DE); RATZISBERGER, Dominik, 94149 Kößlarn (DE); SCHOBER, Franz Xaver Michael, 94154 Neukirchen vorm Wald (DE); SCHÖNBAUER, Norbert, 94072 Bad Füssing (DE); WEGER, Michael, 94149 Kößlarn (DE)
(74) Vertreter: Michalski Hüttermann & Partner Patentanwälte mbB
(86) Internationale Anmeldenummer: PCT/EP2021/053019
(87) Internationale Veröffentlichungsnummer: WO 2021/204437

(56) Entgegenhaltungen:
- EP-A2- 0 375 419
- WO-A1-2019/185224
- CN-A- 106 253 538
- DE-A1- 2 161 139
- DE-B- 1 200 932
- US-A- 3 348 085
- US-A- 4 321 497

## Beschreibung

Die Erfindung betrifft ein Haltesystem für Stromschienen an Statoren bzw. Statorsegmenten dynamoelektrischer Maschinen, insbesondere Windkraftgeneratoren, als auch einen derartigen Stator einer dynamoelektrischen Maschine und eine Windkraftanlage.

Spulen, insbesondere größerer dynamoelektrischer Maschinen werden in Spulengruppen oder Spulensystemen elektrisch zusammengefasst. Dazu wurden in der Regel Stromschienen benötigt, welche bei erhöhtem Eigengewicht nicht mehr direkt an den Wickelköpfen befestigt werden können. Bei Windkraftanlagen, speziell bei direkt angetriebenen Windkraftgeneratoren, werden üblicherweise massive Stromschienen verwendet, die die Eigengewichtsproblematik zusätzlich erhöhen.

Derartige Stromschienen eines direkt angetriebenen Windkraftgenerators, der segmentiert aufgebaut ist, sind beispielsweise aus der WO 2019/185224 A1 bekannt.

Aus US 4 321 497 A ist ein Stator mit mehreren übereinander liegenden Spulen bekannt, wobei eine jeweilige Spule zwei Spulenseiten mit axial aus dem Stator herausragenden Enden aufweist, die kopfseitig des Stators durch einen C-förmigen Verbindungsring miteinander verbunden sind. Dabei sind Halteelemente vorgesehen, die kopfseitig an dem Stator angeschraubt sind, wobei an den Halteelementen mittels Spacern mehrere Aufnahmen für Verbindungsringe ausgebildet sind. Die Spacer sind aus einem isolierenden Material gebildet.

Aus DE 2 161 139 A1 ist eine elastische Wickelkopfabstützung bekannt, bei der Spulen axial beweglich gegenüber dem Stator gehalten sind.

Aus CN 106 253 538 A ist ein Halteelement für einen elektrisch leitenden Ring an einem Stator bekannt.

Aus US 3 348 085 A ist eine Abstützung für Statorwicklungen bekannt.

Aus EP 0 375 419 A2 ist ferner eine Leiterringanordnung für eine dynamoelektrische Maschine bekannt.

Aus DE 1 200 932 A ist ein Halterung für Sammelschienen an einer Pressplatte eines Stators bekannt, bei der die Sammelschienen zwischen einem Abstandsblock, Winkelstücken und einem Halterungsstück mit dazwischenliegenden, zunächst verformbaren Polsterungen geklemmt werden. Die Polsterungen passen sich dabei der Form der Sammelschienen an und werden anschließend ausgehärtet.

Ausgehend davon liegt der Erfindung die Aufgabe zugrunde, ein Haltesystem zu schaffen, das für Stromschienen einer dynamoelektrischen Maschine, insbesondere für einen direkt angetriebenen Generator einer Windkraftanlage geeignet ist. Dabei soll vor allem die erforderliche Isolationsfestigkeit/Isolationsabstände dieser Stromschienen innerhalb dieses Haltesystems eingehalten werden, als auch für eine ausreichende Kühlmöglichkeit für die Stromschienen und die dynamoelektrische Maschine gesorgt werden. Des Weiteren soll das Haltesystem möglichst in den Aufbau der dynamoelektrischen Maschine integriert sein, um einen kompakten Generator in einer Gondel einer Windkraftanlage bereitzustellen.

Die Lösung der gestellten Aufgabe gelingt durch ein Haltesystem von Stromschienen mit folgenden Elementen: einem Grundelement an einer Stirnseite eines Stators oder Statorsegments einer dynamoelektrischen Maschine befestigbar und einer vorgegebenen Anzahl von Fixierelementen mittels derer die Stromschienen am Grundelement fixierbar sind.

Die Lösung der gestellten Aufgabe gelingt ebenso durch einen Stator bzw. Statorsegment einer dynamoelektrischen Maschine,
- wobei dort im Wesentlichen axial verlaufenden Nuten eines Blechpaketes ein Wicklungssystem vorgesehen ist, dass an den Stirnseiten Wickelköpfe ausbildet,
- wobei das Blechpaket auf einem Trägersystem angeordnet ist, das Druckplatten im Bereich der Stirnseite aufweist, die mittels Verbindungselemente fixiert sind,
- wobei ein Haltesystem von Stromschienen nach Anspruch 1 vorgesehen ist, das mit einem Grundelement an einer Stirnseite eines Stators oder Statorsegments der dynamoelektrischen Maschine befestigbar ist und Stromschienen mittels einer vorgegebenen Anzahl von Fixierelementen am Grundelement fixierbar sind.

Die Lösung der gestellten Aufgabe gelingt ebenso durch einen Generator einer Windkraftanlage mit Stator oder Statorsegment.

Die Lösung der gestellten Aufgabe gelingt ebenso durch eine Windkraftanlage mit einem Generator.

Durch das erfindungsgemäße Haltesystem, dass insbesondere durch Stahl realisiert ist, können nun befestigungsrelevante belastbare Bohrungen direkt in die Grundelemente und Fixierelemente eingebracht werden. Zusätzliche Fixierkomponenten können dabei entfallen und der Montageaufwand wird dabei wesentlich vereinfacht. Dadurch erhöht sich die Steifigkeit des Haltesystems, insbesondere seiner Komponenten wie Grundelement und Fixierelementen, so dass die gesamten Anschlussflächen für Stromschienen schwingungsärmer sind.

Der Verlauf der Stromschienen an der Stirnseite des Stators bzw. Statorsegments kann damit auch hinsichtlich der erforderlichen Isolationsstrecken optimiert werden, so dass eine optimierte Ausführung der Dimensionen des Haltesystems der Belüftung des Wickelkopfes des Stators zu Gute kommt.

Die Anordnung der Stromschienen stellen die jeweilige Zuleitung zu einer Phase einer Spulengruppe des Wicklungssystems der dynamoelektrischen Maschine, insbesondere des Generators dar.

Eine elektrische Kontaktierung der Stromschienen in Umfangsrichtung kann durch Zusammenstecken, verschweißen, Litzenverbindungen erfolgen.

Um eine weitere Gewichtsreduzierung der Stromschienen zu erhalten, können diese bezüglich ihres Querschnitts ausgehend vom Einspeisepunkt reduziert werden.

Am Haltesystem können ebenso in einfacher Art und Weise Datenleitungen mit verlegt werden, indem diese mit Kabelbinder am Haltesystem befestigt werden.

Das Haltesystem mit seinen Stromschienen, Sternpunktverbindungen, Erdungsleitungen und Datenleitungen ist im Wesentlichen radial unter dem Wickelkopf eines Statorsegments oder des Stators angeordnet. Dies führt zu einem kompakteren Aufbau. Dieser Aufbau ermöglicht auch die Einbindung der Stromschienen in eine eventuelle Kühlanordnung der Wickelköpfe.

Das Statorsegment mit funktionsfertigem Wicklungssystem, vormontierter Stromschienen am Statorsegment ermöglicht eine fast komplette werksseitige, und damit geprüfte Vormontage, die die anlagenseitige Montagezeit reduziert.

Mittels der Anordnung der Stromschienen an der Stirnseite des Stators lässt sich ein kompakter Aufbau der dynamoelektrischen Maschine, insbesondere eines Generators einer Windkraftanlage bereitstellen.

Damit ist ein kompakter Aufbau dieses Generators bei gleichzeitig ausreichender Belüftung seines Wicklungssystems und der Stromschienen möglich.

Die Erfindung sowie weitere vorteilhafte Ausgestaltungen der Erfindung werden anhand prinzipiell dargestellter Ausführungsbeispiele näher erläutert, darin zeigen:
- FIG 1: Elemente des Haltesystems,
- FIG 2: perspektivische Darstellung von Stromschienen im Haltesystem,
- FIG 3: Statorsegment
- FIG 4: prinzipieller Anordnung von Statorsegmenten,
- FIG 5: direkt angetriebener Generator,
- FIG 6: Windkraftanlage.

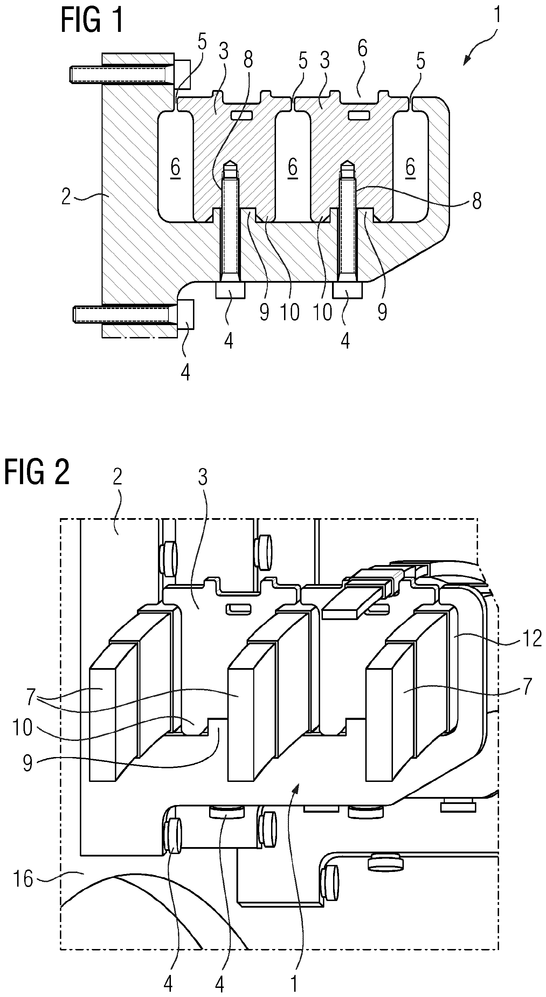

FIG 1 zeigt ein Haltesystem 1, gemäss Anspruch 1, das grundsätzlich aus einem Grundelement 2 und Fixierelementen 3 aus Stahl aufgebaut ist. Diese Grundelemente 2 sind im eingebauten Zustand mittels Schraubverbindungen 4 an einer Druckplatte 16 befestigt. Die Fixierelemente 3 sind im eingebauten Zustand am jeweiligen Grundelement 2 befestigt. Die Fixierelemente 3 weisen Füße 10 auf, um einen Nocken 9 des Grundelements 2 zu umfassen, wobei durch eine asymmetrisch angeordnete Bohrung 8 gewährleistet ist, dass eine Verwechslung der Einbaulage der Fixierelemente 3 ausgeschlossen ist.

Im zusammengebauten Zustand des Haltesystems 1 ergeben sich nunmehr Bauräume 6 für die Stromschienen 7, als auch gegebenenfalls für Sternpunktverbindungen oder Erdungsleitungen. Im zusammengebauten Zustand weist das Haltesystem 1 Öffnungen 5 auf. Damit werden bei bestromten Stromschienen 7 Wirbelströme unterdrückt, da keine geschlossenen metallischen Verbindungen zwischen den Einzelelementen vorhanden sind.

FIG 2 zeigt in einer teilperspektivischen Darstellung die Anordnung der Stromschienen 7 innerhalb des Haltesystems 1, wobei das Haltesystem 1 dabei an den Druckplatten 16 eines Stators 22 oder eines Statorsegments 13 angebracht ist. Im Bereich des Grundelements 2 und der Fixierelemente 3 weisen die Stromschienen 7 Isolationselemente 12 auf, die je nach anliegender Spannung unterschiedliche Dicken aufweisen.

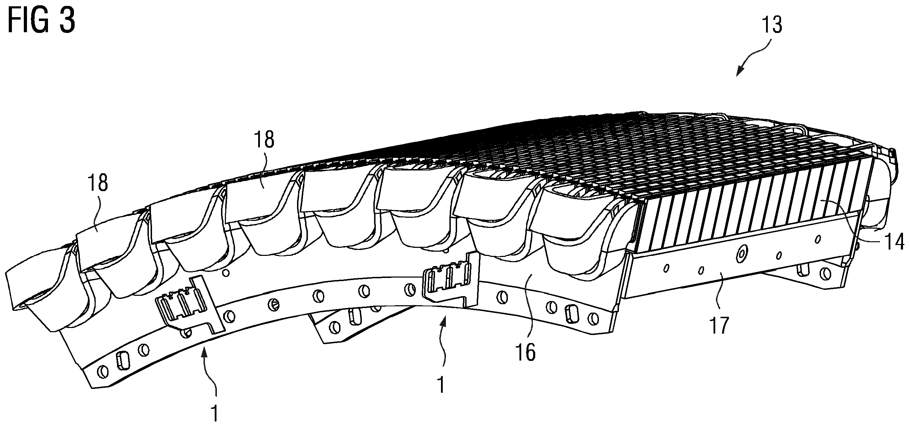

FIG 3 zeigt ein beispielhaftes Statorsegment 13 in perspektivische, aber nicht maßstäblicher Darstellung, mit Haltesystem 1, aber ohne Stromschienen 7, wobei das Blechpaket 14 in Axialrichtung aus Teilblechpaketen aufgebaut ist. Das Blechpaket 14 ist in axialer Richtung durch Druckplatten 16 begrenzt und fixiert, wobei Verbindungselemente 17 dabei die Druckplatten 16 an den Stirnseiten des Statorsegments 13 zusammenhalten. In nicht näher dargestellten Nuten des Blechpakets 14 sind Formspulen 18 angeordnet, deren Wickelköpfe unterschiedliche Kröpfungen aufweisen. Diesen Formspulen 18 wird nunmehr elektrische Energie bereitgestellt bzw. daraus abgeführt. Dies geschieht über die Stromschienen 7, die am Haltesystem 1 an der Stirnseite, insbesondere an den Druckplatten 16 positioniert werden.

Die Stromschienen 7 erstrecken sich dabei bei einem Statorsegment 13 über die gesamte umfängliche Breite, entspricht somit ungefähr der Länge der Druckplatte 16. Je nach Verbindungsart zu den umfänglich benachbarten Statorsegmenten können die Stromschienen 7, dabei länger oder kürzer sein.

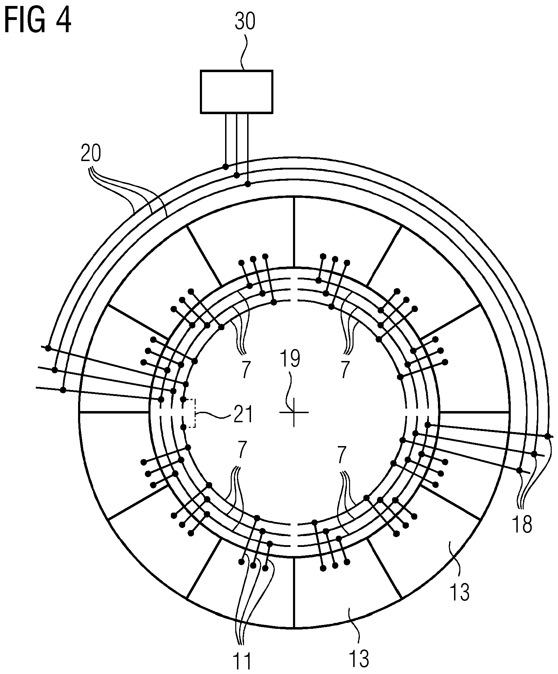

FIG 4 zeigt einer prinzipiellen Darstellung einen Stator 22 der aus Statorsegmenten 13 aufgebaut ist, wobei aus einem Haltesystem 1, das drei Stromschienen 7 aufweist die jeweiligen Spulen 18 bzw. Spulengruppen eines jeden Statorsegments 13 über dieses Stromschienensystem kontaktiert werden.

Dabei sind die Stromschienen 7 gebogen ausgeführt und folgen dabei im Wesentlichen dem Radius des Stators 22. Jedes Statorsegment 13 kann dabei seine bereits im Haltesystem 1 positionierten Stromschienen 7 aufweisen. Bei der Montage der Statorsegmente 13 zu einem Stator 22 werden dabei im Anschluss auch die jeweiligen Stromscheinen 7 kontaktiert.

Es sind aber auch jeweilige Stromschienenabschnitte möglich, die sich in Umfangsrichtung über zwei, drei oder mehrere Segmente erstrecken. Es sind demnach Viertelkreise oder auch Halbkreis möglich. Die elektrischen Verbindungsleitungen 20 müssen dementsprechend angepasst sein.

Mittels Kontaktelemente 21 erfolgt eine elektrische Kontaktierung zwischen Stromschienenabschnitten einer Phase. Eine derartige elektrische Kontaktierung der Stromschienenabschnitte in Umfangsrichtung kann durch Zusammenstecken, verschweißen, Litzenverbindungen etc. erfolgen.

Durch Lüfter kann nunmehr der kompakte Aufbau durch dementsprechend geführte Luftströme über bzw. durch das Blechpaket 14, als auch im Bereich der Wickelköpfe und der Stromschienen 7 ausreichend gekühlt werden.

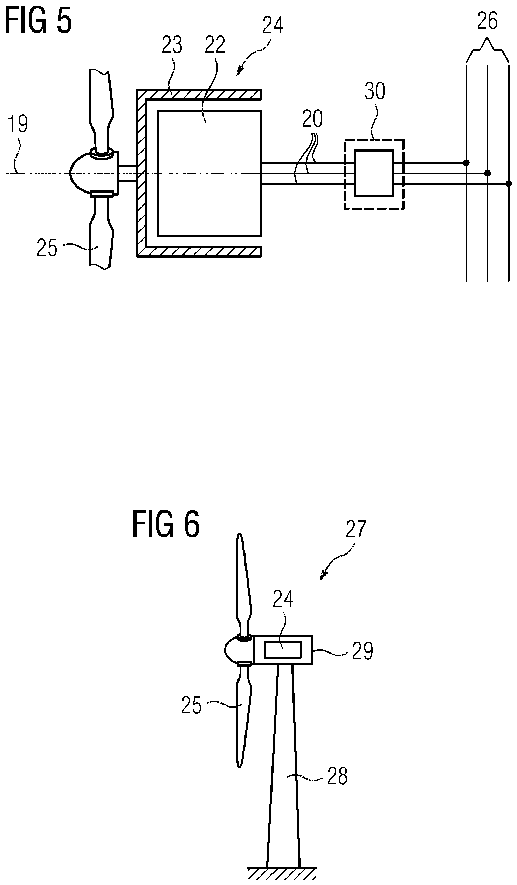

FIG 5 zeigt einer prinzipiellen Anordnung einen direkt angetriebenen Generator 24 einer Windkraftanlage 27, wobei die Drehung des Windrades 25 einen Rotor 23 antreibt, der durch elektromagnetische Wechselwirkung mit einem Wicklungssystem des Stators 22 elektrische Energie erzeugt, die über eine Umrichtereinheit 30 einem Versorgungsnetz 26 zur Verfügung gestellt wird.

Eine derartige Anordnung ist beispielsweise bei Windkraftanlagen 27 gemäß FIG 6 vorzusehen, dabei wird ein Generator 24 in einer Gondel 29 auf einem Turm 28 angeordnet.

## Patentansprüche

1. Haltesystem (1) von Stromschienen (7) mit folgenden Elementen:
einem Grundelement (2), das an einer Stirnseite eines Stators (22) oder Statorsegments (13) einer dynamoelektrischen Maschine (24) befestigbar ist und einer vorgegebenen Anzahl von Fixierelementen (3) mittels derer die Stromschienen (7) am Grundelement (1) fixierbar sind, wobei im zusammengebauten Zustand das Haltesystem (1) Öffnungen (5) aufweist, um bei bestromten Stromschienen (7) Wirbelströme zu unterdrücken, **dadurch gekennzeichnet, dass** die Fixierelemente (3) im eingebauten Zustand jeweils einzeln an dem Grundelement (2) befestigt sind, und wobei eine Fixierung der Fixierelemente (3) am Grundelement (2) mittels Schrauben erfolgt.

2. Stator (22) oder Statorsegment (13) einer dynamoelektrischen Maschine,
- wobei dort in im Wesentlichen axial verlaufenden Nuten eines Blechpaketes (14) ein Wicklungssystem vorgesehen ist, dass an den Stirnseiten Wickelköpfe ausbildet,
- wobei das Blechpaket (14) auf einem Trägersystem (15) angeordnet ist, dass Druckplatten (16) im Bereich der Stirnseite aufweist, die mittels Verbindungselemente (17) fixiert sind,
- wobei ein Haltesystem (1) von Stromschienen (7) nach Anspruch 1 vorgesehen ist, das mit einem Grundelement (2) an einer Stirnseite eines Stators (22) oder Statorsegments (13) der dynamoelektrischen Maschine befestigbar ist und Stromschienen (7) mittels einer vorgegebenen Anzahl von Fixierelementen (3) am Grundelement (1) fixierbar sind, wobei die Fixierelemente (3) im eingebauten Zustand jeweils einzeln an dem Grundelement (2) befestigt sind, und wobei eine Fixierung der Fixierelemente (3) am Grundelement (2) mittels Schrauben erfolgt,
- wobei im zusammengebauten Zustand das Haltesystem (1) Öffnungen (5) aufweist, um bei bestromten Stromschienen (7) Wirbelströme zu unterdrücken.

3. Stator (22) oder Statorsegment (13) einer dynamoelektrischen Maschine, nach Anspruch 2, **dadurch ge- kennzeichnet,** dass die Stromschienen (7) im Wesentlichen radial unterhalb der Wickelköpfe verlaufen.

4. Stator (22) oder Statorsegment (13) einer dynamoelektrischen Maschine, nach Anspruch 2 oder 3, **dadurch gekennzeichnet, dass** eine Fixierung des Grundelements (2) an der Stirnseite eines Stators (22) oder Statorsegments (13) der dynamoelektrischen Maschine an den Druckplatten (16) mittels Schrauben erfolgt.

5. Stator (22) oder Statorsegment (13) einer dynamoelektrischen Maschine, nach einem der Ansprüche 2 bis 4, **da- durch gekennzeichnet** , dass zumindest im Bereich der Grundelemente (2) und der Fixierelemente (3) die Stromschienen (7) Isolationselemente (12) aufweisen.

6. Generator (24) einer Windkraftanlage (27) mit einem Stator (22) oder Statorsegmenten (13) nach einem der Ansprüche 2 bis 5.

7. Windkraftanlage (27) mit einem Generator (24) nach Anspruch 6.

## Claims

1. A retaining system (1) for bus bars (7), comprising the following elements:
a basic element (2) that can be fastened to an end face of a stator (22) or stator segment (13) of a dynamoelectric machine (24), and a predefined number of fixing elements (3) by means of which the bus bars (7) can be fixed to the basic element (2), wherein, when assembled, the retaining system (1) has openings (5), in order to suppress eddy currents when the bus bars (7) are energized, **characterized in that** the fixing elements (3) are each individually fastened to the base element (2), and wherein the fixing elements (3) are fixed to the base element (2) by means of screws.

2. A stator (22) or stator segment (13) of a dynamoelectric machine,
- wherein, provided there, in substantially axially extending grooves of a laminated core (14), there is a winding system that forms winding overhangs at the end faces,
- wherein the laminated core (14) is arranged on a support system (15) which, in the region of the end face, has pressure plates (16) that are fixed by means of connection elements (17),
- wherein a retaining system (1) for bus bars (7) as claimed in claim 1 is provided, which can be fastened with a basic element (2) to an end face of a stator (22) or stator segment (13) of the dynamoelectric machine, and bus bars (7) can be fixed to the basic element (2) by means of a predefined number of fixing elements (3), wherein the fixing elements (3) are each individually fastened to the base element (2), and wherein the fixing elements (3) are fixed to the base element (2) by means of screws
- wherein, when assembled, the retaining system (1) has openings (5), in order to suppress eddy currents when the bus bars (7) are energized.

3. The stator (22) or stator segment (13) of a thermoelectric machine, as claimed in claim 2, **characterized in that** the bus bars (7) extend substantially radially beneath the winding overhangs.

4. The stator (22) or stator segment (13) of a thermoelectric machine, as claimed in claim 2 or 3, **characterized in that** the basic element (2) at the end face of a stator (22) or stator segment (13) of the dynamoelectric machine is fixed to the pressure plates (16), and/or the fixing element (3) is fixed to the basic element (2), by means of screws.

5. The stator (22) or stator segment (13) of a thermoelectric machine, as claimed in any one of claims 2 to 4, **characterized in that** the bus bars (7) have insulation elements (12, at least in the region of the basic elements (2) and the fixing elements (3).

6. A generator (24) of a wind power plant (27) comprising a stator (22) or stator segments (13) as claimed in any one of claims 2 to 5.

7. A wind power plant (27) comprising a generator (24) as claimed in claim 6.

## Revendications

1. Système de maintien (1) de barres conductrices (7) comprenant les éléments suivants :
un élément de base (2), qui peut être fixé sur une face frontale d'un stator (22) ou d'un segment de stator (13) d'une machine dynamoélectrique (24), et un nombre prédéterminé d'éléments de calage (3) au moyen desquels les barres conductrices (7) peuvent être calées au niveau de l'élément de base (1),
le système de maintien (1) présentant, à l'état assemblé, des ouvertures (5) destinées à supprimer les courants de Foucault lorsque les barres conductrices (7) sont alimentées en courant, **caractérisé en ce que** les éléments de calage (3) sont fixés chacun individuellement à l'élément de base (2) à l'état monté, et un calage des éléments de calage (3) au niveau de l'élément de base (2) étant effectué au moyen de vis.

2. Stator (22) ou segment de stator (13) d'une machine dynamoélectrique,
- un système d'enroulement y étant présent dans des rainures qui suivent un tracé sensiblement axial d'un paquet de tôles (14), lequel forme des têtes d'enroulement au niveau des faces frontales,
- le paquet de tôles (14) étant disposé sur un système porteur (15), qui possède des plaques de pression (16) dans la zone de la face frontale, lesquelles sont calées au moyen d'éléments de liaison (17),
- un système de maintien (1) de barres conductrices (7) selon la revendication 1 étant présent, lequel peut être fixé par un élément de base (2) à une face frontale d'un stator (22) ou d'un segment de stator (13) de la machine dynamoélectrique et des barres conductrices (7) pouvant être calées au niveau de l'élément de base (1) au moyen d'un nombre prédéterminé d'éléments de calage (3),
les éléments de calage (3) étant fixés chacun individuellement à l'élément de base (2) à l'état monté, et un calage des éléments de calage (3) au niveau de l'élément de base (2) étant effectuée au moyen de vis,
- le système de maintien (1) présentant, à l'état assemblé, des ouvertures (5) afin de supprimer les courants de Foucault lorsque les barres conductrices (7) sont alimentées en courant.

3. Stator (22) ou segment de stator (13) d'une machine dynamoélectrique selon la revendication 2, **caractérisé en ce que** les barres conductrices (7) suivent un tracé sensiblement radial en dessous des têtes d'enroulement.

4. Stator (22) ou segment de stator (13) d'une machine dynamoélectrique selon la revendication 2 ou 3, **caractérisé en ce qu'**un calage de l'élément de base (2) au niveau de la face frontale d'un stator (22) ou d'un segment de stator (13) de la machine dynamoélectrique est effectué sur les plaques de pression (16) au moyen de vis.

5. Stator (22) ou segment de stator (13) d'une machine dynamoélectrique selon l'une des revendications 2 à 4, **caractérisé en ce qu'**au moins dans la zone des éléments de base (2) et des éléments de calage (3), les barres conductrices (7) possèdent des éléments isolants (12).

6. Générateur (24) d'une éolienne (27) comprenant un stator (22) ou des segments de stator (13) selon l'une des revendications 2 à 5.

7. Éolienne (27) comprenant un générateur (24) selon la revendication 6.
